# EUROPÄISCHE PATENTANMELDUNG

(11) **EP 1 313 295 A1**
(43) Veröffentlichungstag der Anmeldung: **21.05.2003**
(21) Anmeldenummer: 01440388.5
(22) Anmeldetag: 15.11.2001
(51) Int. Cl.: H04L 29/12, H04L 29/06, H04M 3/493

(54) **Verfahren zur Vermittlung von Kommunikationsangeboten zwischen Endgeräten eines Kommunikationsnetzes, sowie Kommunikationsnetz, Diensterechner und Programmmodul hierfür**

(71) Anmelder: ALCATEL, 75008 Paris (FR)
(72) Erfinder: Eisinger, Bernd, 3744 Stockern (AT)
(74) Vertreter: Brose, Gerhard

(57) **Zusammenfassung**

Die Erfindung betrifft ein Verfahren zur Vermittlung von Kommunikationsangeboten zwischen (Teilnehmer-) Endgeräten (T1, T2, T3, T4) eines Kommunikationsnetzes (CN), wobei ein Diensterechner (CS) eine Kommunikationsanforderung eines ersten Endgeräts (T1) und mindestens ein Kommunikationskriterium dazu empfängt, der Diensterechner (CS) diese Kommunikationsanforderung aufgrund der empfangenen Kommunikationskriterien einem Kommunikationsforum zuordnet, gespeicherte Kommunikationsangebote weiterer Endgeräte (T2, T4) ermittelt, welche dem selben Kommunikationsforum zugeordnet sind, der Diensterechner (CS) die Netzadressen ermittelter Endgeräte (T2, T4) an das erste Endgerät (T1) übermittelt und die Kommunikationsanforderung des ersten Endgeräts (T1) als Kommunikationsangebot durch Speichern mindestens der Netzadresse dieses Endgeräts (T1) aufnimmt, sowie ein Kommunikationsnetz (CN), ein Diensterechner (CS) und ein Programmmodul hierfür.

## Beschreibung

Die Erfindung betrifft ein Verfahren zur Vermittlung von Kommunikationsangeboten zwischen Endgeräten eines Kommunikationsnetzes nach dem Oberbegriff des Anspruchs 1, sowie ein Kommunikationsnetz, einen Diensterechner und ein Programmmodul hierfür.

Zur Suche von Partnern, Freunden, Gleichgesinnten oder Menschen, die ein bestimmtes Problem lösen können, werden häufig Kleinanzeigen zum Printmedien aufgegeben oder sogenannte Kontaktbörsen aufgesucht. Diese Einrichtungen erlauben es, Kontakt mit zunächst unbekannten Personen mit übereinstimmenden Interessen aufzunehmen.

Für Teilnehmer des öffentlichen Fernsprechnetzes, insbesondere für Teilnehmer eines Mobilfunknetzes, besteht die Möglichkeit, jederzeit bequem mit anderen Teilnehmern zu kommunizieren. Allerdings dienen diese Netze in erster Linie der Kommunikation zwischen einander bekannten Teilnehmern. Falls die Rufnummer eines bekannten Teilnehmers unbekannt ist, kann mittels eines Auskunftsdienstes, bei Angabe ausreichender Identifikationsmerkmale, beispielsweise des Vornamens, Zunamens und des Ortes, die Rufnummer ermittelt werden. Häufig werden auch Dienstleistungsangebote mit einer Rufnummer versehen, welche ein Teilnehmer anrufen kann, um einem bestimmten Dienst zu erhalten.

Im Internet werden mittels sogenannter Suchmaschinen Dienste angeboten, die eine Suche nach bestimmten Adressen aufgrund von fest definierten Suchkriterien, beispielsweise Ort oder Dienstleistungsart, ermöglichen. Dazu fordert ein (Internet-) Teilnehmer zunächst eine bestimmte Webseite einer ausgewählten Suchmaschine an. Als Antwort erhält er ein sogenanntes Formular, d.h. eine Webseite mit der Möglichkeit einer Eingabe von Suchkriterien. Der Teilnehmer füllt dieses Formular entsprechend aus, beispielsweise durch Freitexteingabe der Suchkriterien und/oder durch Auswählen angezeigter Suchkriterien und sendet die ausgefüllte Webseite an die Suchmaschine zurück. Die Suchmaschine ermittelt aufgrund der empfangenen Suchkriterien eine oder mehrere Adressen und sendet diese mittels einer neuen Webseite an den suchenden Teilnehmer.

Das oben beschriebene Verfahren hat den Nachteil, dass die Adressen, die dazu gehörige Information und die Gruppierung, beispielsweise die Zuordnung zu einer Dienstleistungsbranche, mehr oder weniger statisch definiert werden, d.h. diese Information muss vor einer Suchanfrage entsprechend in eine Datenbank eines Diensteanbieters eingetragen worden sein. Dadurch entsteht eine Trennung zwischen suchbaren und suchenden Teilnehmern, d.h. zwischen Kommunikationswünschen und Kommunikationsangeboten. Eine unmittelbare Aufnahme eines suchenden Teilnehmers als suchbarer Teilnehmer während einer Suchanfrage ist nicht möglich. Daher ist es für einen suchenden Teilnehmer nicht möglich, Adressen oder Information über andere suchende Teilnehmer zu erhalten.

Der Erfindung liegt die Aufgabe zugrunde, ein Verfahren und die zu seiner Ausführung erforderlichen Mittel zu schaffen, um ein transparentes Informations- und Kontaktforum für Teilnehmer eines Kommunikationsnetzes zu schaffen.

Erfindungsgemäß wird diese Aufgabe durch ein Verfahren nach der Lehre des Anspruchs 1, ein Kommunikationsnetz nach der Lehre des Anspruchs 7, einen Diensterechner nach der Lehre des Anspruchs 8 und ein Programmmodul nach der Lehre des Anspruchs 9 gelöst.

Grundgedanke der Erfindung ist es, für eine ersten Teilnehmer mit einem Kommunikationswunsch weitere Teilnehmer mit Kommunikationswünschen des selben Kommunikationsthemas sichtbar zu machen. Dazu empfängt ein Server oder Diensterechner einen Kommunikationswunsch eines ersten Endgeräts, welches dazu mindestens ein Kommunikationskriterium übermittelt. Der Diensterechner ordnet diesen Kommunikationswunsch aufgrund der empfangenen Kommunikationskriterien einem Kommunikationsthema oder Kommunikationsforum zu, und ermittelt gespeicherte Kommunikationswünsche weiterer Endgeräte, welche dem selben Kommunikationsforum zugeordnet sind. Der Diensterechner übermittelt die Netzadressen ermittelter Endgeräte an das erste Endgerät und speichert den Kommunikationswunsch des ersten Endgeräts. Dazu speichert er mindestens die Netzadresse dieses Endgeräts und die Zuordnung zu einem Kommunikationsforum.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnung weiter erläutert:

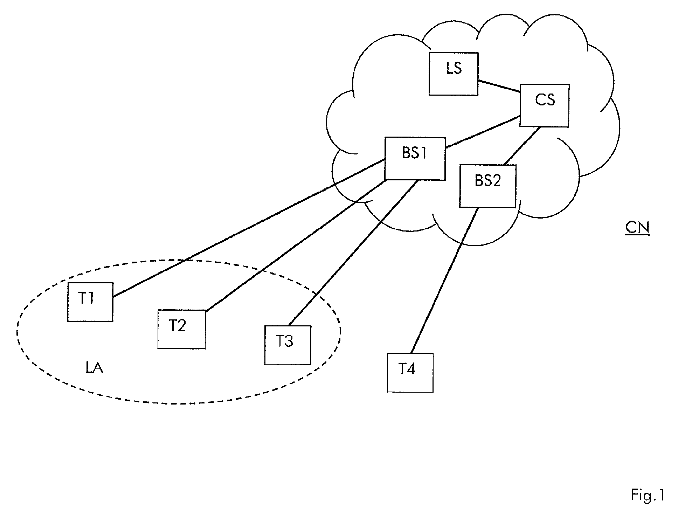

- Fig.1: zeigt schematisch ein erfindungsgemäßes Kommunikationsnetz zur Ausführung des erfindungsgemäßen Verfahrens.

Fig.1 zeigt ein Mobilfunknetz CN, welches beispielhaft ein erstes (Mobilfunk-) Basissubsystem BS1 (engl.: base sub system) und ein zweites Basissubsystem BS1, einen Ortungsserver LS und einen Diensterechner CS aufweist. Beispielhaft sind drei (Mobilfunk-) Endgeräte T1, T2 und T3 jeweils über eine Luftschnittstelle mit dem ersten Basissubsystem BS1und ein viertes Endgerät T4 mit dem zweiten Basissubsystem BS2 verbunden. Beide Basissubsysteme BS1 und BS2 sind über hier nicht dargestellte vermittelnde Einrichtungen, beispielsweise eine Mobilfunkvermittlungsstelle oder einen Wireless Application Protocol (WAP-) Zugangsserver, mit dem Diensterechner CS verbunden. Der Diensterechner CS ist weiter mit dem Ortungsserver LS verbunden. Weiter ist ein Ortsbereich LA gestrichelt eingezeichnet, innerhalb dessen sich beispielhaft das erste, zweite und dritte Endgerät T1, T2 und T3 befinden, während sich das vierte Teilnehmerendgerät T4 beispielhaft außerhalb dieses Ortsbereichs LA befindet.

Das Mobilfunknetz CN stellt beispielsweise ein zelluläres digitales Kommunikationsnetz nach dem weit verbreiteten GSM-Standard (engl.: Global System for Mobile Communication) dar. Das Versorgungsgebiet des Mobilfunknetzes CN ist in eine Vielzahl von Teilgebieten oder Funkzellen unterteilt. In der Regel ist jeder dieser Funkzellen einer Basisstation (engl.: Base Transceiver Station, BTS) zugeordnet. Jedes der Basissubsysteme BS1 oder BS2 bestehend aus mindestens einer Basisstation und einer Basissteuereinheit (engl.: Base Station Controller, BSC). Diese mit Sendeund Empfangseinrichtungen versehenden Basisstationen bilden netzseitig die Endpunkte der Funkübertragung zwischen den Endgeräten T1- T4 und dem Mobilfunknetz CN. Ein oder mehrere Basisstationen sind an eine Basissteuereinheit (BSC) angeschlossen, welche die Sende- und Empfangsressourcen der an ihn angeschlossenen Basisstationen verwaltet.

Der Endgeräte T1- T4 stellen bevorzugt Mobilfunk-Endgeräte mit einen sogenannten WAP-Browser dar, welche mittels sogenannter WAP-Seiten mit einem entsprechenden als sogenannter WAP-Server ausgebildeten Diensterechner CS kommunizieren. Das Mobilfunknetz CN stellt dabei ein WAP-fähiges Mobilfunknetz dar, beispielsweise ein Mobilfunknetz nach dem weit verbreiteten GSM-Standard (engl.: Global System for Mobile Communication). Das oben genannte Wireless Application Protocol (WAP) beschreibt eine Protokollfolge, welche der Kommunikation sogenannter WAP-Seiten zwischen einem WAP-Server und einem WAP-Endgerät, d.h. einem Mobilfunkendgerät mit einem sogenannten WML-Browser (WML = Wireless Mark-up Language) dient. Von einem Endgerät angeforderte WAP-Seiten können sogenannte Formulare darstellen; diese WAP-Seiten weisen Felder zur Eingabe von Information auf, welche mittels der Endgerätetastatur eingegeben werden kann und mittels quittieren, beispielsweise anwählen einer OK-Schaltfläche, an den WAP-Server übermittelt wird. So können einem Teilnehmer beispielsweise mehrere alternativ auszuwählende Kommunikationstforen angeboten werden, aus welchen der Teilnehmer durch Markierung ein bestimmtes Kommunikationsforum auswählt. Die Ergebnisse, beispielsweise Teilnehmer mit Rufnummern, Namen und sonstiger Information kann mittels einer scrollbaren Liste auf dem Display des Endgeräts dargestellt werden. Durch anklicken oder anwählen einer der dargestellten Rufnummern oder eines entsprechenden Symbols kann schließlich automatisch die Herstellung der entsprechenden Rufverbindung veranlasst werden.

Teilnehmer eines zellularen Mobilfunknetzes, beispielsweise des GSM-Netzes, werden kontinuierlich geortet. Sobald ein Teilnehmer einen sogenannten geographischen Bereich des Netzes verlässt und in einen neuen geographischen Bereich eintritt, wird dieser Teilnehmer und der neue geographische Bereich in einer sogenannten Besucherdatei (engl.: Visitors Location Register, VLR) vermerkt. Theoretisch ist damit eine Ortung von Endgeräten bis auf die Ebene der Zellen möglich. In der Regel werden jedoch mehrere Zellen zu einem geographischen Bereich oder einer sogenannten location area LA zusammengefasst. Je nach Mobilfunknetz kann ein geographischen Bereich eine recht große Fläche (beispielsweise bis zu mehreren tausend Quadratkilometern) einnehmen.

Es sind Verfahren bekannt, mit deren Hilfe eine wesentlich genauere Ortung von Endgeräten eines Mobilfunknetzes als vorhin beschrieben ermöglicht wird. Bei einem dieser Ortungsverfahren empfängt ein zu ortendes Endgerät von verschiedenen Basisstationen innerhalb eines unbestimmten Umkreises in bestimmten Zeitabständen synchronisiert gesendete Pilotsignale. Das Endgerät ermittelt die Laufzeitdifferenzen der empfangenen Pilotsignale zueinander und sendet diese Messergebnisse an den Ortungsserver LS. Bei bekannter Ausbreitungsgeschwindigkeit (Lichtgeschwindigkeit) der Signale können diese Laufzeitdifferenzen dort direkt in Entfernungsdifferenzen der entsprechenden Basisstationen zum Endgerät umgerechnet werden. Mit der Kenntnis der Positionen der Basisstationen und einer ausreichenden Anzahl von Entfernungsdifferenzen ermittelt der Ortungsserver LS die Position des zu ortenden Endgeräts mit einer Genauigkeit, die von der Qualität der Messergebnisse abhängt, in der Regel aber wesentlich größer als die Genauigkeit einer vorhin beschriebenen Ortung auf Ebene der Zellen ist.

Alternativ kann eine genaue Teilnehmerortung auch mittels des bekannten sogenannten Global Positioning Systems (GPS) durchgeführt werden, wobei entsprechende GPS-Empfänger in die Endgeräte T1- T4 integriert sind und diese jeweils die Position des entsprechenden Endgeräts autonom ermitteln und die ermittelte Position dem Diensterechner CS oder Ortungsserver LS übermitteln.

Die Erfindung kann prinzipiell in jedem Kommunikationsnetz ausgeführt werden. Da die Erfindung jedoch besonders vorteilhaft für mobile Teilnehmer ausgeführt werden kann, für welche ein wesentliches Kriterium für die Auswahl von Kommunikationspartnern die Entfernung darstellt, wird im folgenden im Folgenden ein einfacher funktionaler Kommunikationsablauf zur Vermittlung eines Kommunikationswunsches im in einem Mobilfunknetz CN beschrieben:
- Das erste Endgerät T1 sendet einen Kommunikationswunsch an den Diensterechner CS,
- der Diensterechner CS übermittelt ein (WAP-) Formular zur:
   - Eingabe eines Kommunikationskriteriums oder Auswahl eines vordefinierten Kommunikationsthemas oder Kommunikationsforums,
   - Eingabe eines Ortsbereichs LA oder Auswahl eines vordefinierten Ortsbereichs LA, auf welche sich die Suche von Teilnehmern beschränken soll,
   - Eingabe einer an weitere Teilnehmer des selben Kommunikationsforums zu übermittelnde Information, welche beispielsweise Angaben zur Person oder spezielle Kommunikationswünsche beinhalten kann.
- Das erste Endgerät T1 sendet das ausgefüllte Formular, genau genommen die eingetragene Information zurück an den Diensterechner CS,
- der Diensterechner CS ermittelt in einer Teilnehmerdatenbank gespeicherte Rufnummern derjenigen Endgeräte T2, T3, T4, welche dem selben Kommunikationsforum zugeordnet sind (Endgeräte T2 und T4),
- der Diensterechner CS kontaktiert den Ortungsrechner LS oder eine andere Einrichtung des Mobilfunknetzes (VLR) zur Ermittlung der aktuellen Aufenthaltsorte der zugeordneten Endgeräte T2 und T4
- der Diensterechner CS ermittelt aus den zugeordneten EndgeräteT2 und T4 diejenigen, welche sich im gewünschten Ortsbereich LA befinden (Endgerät T2),
- der Diensterechner CS übermittelt die Rufnummer(n) der/des ermittelten Endgeräte/Endgeräts T2 mit jeweils gespeicherter Information in Form einer scrollbaren Liste an das erste Endgerät T1,
- der Teilnehmer des ersten Endgeräts T1 klickt eine entsprechende Schaltfläche auf der Anzeige an oder betätigt eine bestimmte Taste, beispielsweise die sogenannte Return-Taste, zur Herstellung einer Kommunikationsverbindung zu einem ausgewählten Teilnehmer,
- das Mobilfunknetzes CN empfängt die entsprechende Rufnummer des ausgewählten Teilnehmers und stellt eine Verbindung zwischen dem ersten Endgerät T1 und dem zweiten Endgerät T2 her und
- der Diensterechner CS speichert die Rufnummer des ersten Endgeräts T1, die Zuordnung zum ausgewählten Kommunikationsforum und gegebenenfalls die übermittelte Information in der Teilnehmerdatenbank.

Der Teilnehmer des ersten Endgeräts T1 wird vorzugsweise die Möglichkeit gegeben, mehrfach, d.h. zu verschiedenen Zeiten, Abfragen zu einem einmal eingegebenen Kommunikationswunsch durchzuführen. Der Diensterechner CS erkennt jeweils, dass kein neuer Kommunikationswunsch vorliegt und führt eine aktuelle Ermittlung der entsprechenden Teilnehmer aufgrund der einmal eingegebenen Parameter durch. Sinnvoll ist es allerdings, eine maximale Gültigkeitsdauer der Kommunikationswünsche festzulegen (beispielsweise nur innerhalb eines Tages). Es kann dazu beispielsweise vorgesehen werden, dass für jeden Kommunikationswunsch pro Tag eine bestimmte Gebühr zu entrichten ist.

Alternativ dazu kann statt eines absoluten Ortsbereichs LA oder der Auswahl eines vordefinierten Ortsbereichs auch die Eingabe eines Ortsbereich relativ zu seinem eigenen Aufenthaltsort vorgesehen werden. Beispielsweise kann vorgesehen werden, dass nur zugeordnete Endgeräte T2, T3 und T4 ermittelt werden, welche sich in demselben aktuellen Ortbereich LA des anrufenden ersten Endgeräts T1 aufhalten. Komfortabler kann die Eingabe eines relativen Ortsbereichs LA bei einem oben beschriebenen genauen Ortungsverfahrens gestaltet werden. Dabei kann dem anrufenden Teilnehmer T1 beispielsweise die Wahl einer bestimmten maximalen Entfernung zu seinem Endgerät T1 angeboten werden. Bei jeder Anfrage werden dann diejenigen zugeordneten Endgeräte ermittelt, welche sich innerhalb eines entsprechenden Umkreises mit dem ersten Endgerät T1 als Mittelpunkt aufhalten.

Die aktuelle Position der ermittelten Endgeräte kann zusätzlich zur anderen Information bei jeder Anfrage an das erste Endgerät T1 übermittelt werden, beispielsweise durch Angabe jeweils eines entsprechenden politischen Orts (Stadt, Stadtteil) und/oder der jeweils aktuellen relativen Entfernung zum ersten Endgerät T1. Dabei können die ermittelten Endgeräte entsprechend der aktuellen Entfernung in einer entsprechenden Liste geordnet werden.

Zur Sicherung des beschriebenen Dienstes gegen unbefugtes Nutzen, beispielsweise bei Verlust des Endgeräts, kann vor zu Beginn des beschriebenen Verfahrens eine Authentifizierung des Entsprechenden Teilnehmers vorgesehen werden. Dazu kann beispielsweise die Eingabe einer Geheimnummer oder eines persönlichen Identifizierungsnummer (Personal Identification Number, PIN) durch den entsprechenden Teilnehmer vorgesehen werden. Dies ist besonders dann vorteilhaft, wenn mit diesem Dienst eine Belastung eines Kundenkontos vorgenommen werden soll.

Alternativ zum Kommunikation mittels des Wireless Application Protocols kann auch ein sogenannte Kurznachrichtensystem (engl.: short message system, SMS) verwendet werden.

In einer weiteren Alternative wird das erfindungsgemäße Verfahren mittels des sogenannten Intelligenten Netzes durchgeführt, welches dem Mobilfunknetz oder dem herkömmlichen Fernsprechnetz überlagert ist. Dazu werden die Vermittlungsstellen als sogenannte Service Switching Points SSP ausgebildet. Der Diensterechner CS ist als sogenannter zentraler Service Control Point SCP ausgebildet. Der Teilnehmer des ersten Endgeräts T1 wählt dann beispielsweise eine bestimmte Dienste-Rufnummer, welche in der Vermittlungsstelle mittels Auswertung bestimmter Ziffern identifiziert wird. Die Vermittlungsstelle informiert den Diensterechner CS über den Anruf, welcher die Vermittlungsstelle anweist, eine Nutzverbindung von einem Kommunikationsserver zum ersten Endgerät T1 aufzubauen. Der Diensterechner CS weist den Kommunikationsserver an, mit dem Teilnehmer des ersten Endgeräts T1 mittels Sprachkommunikation zu kommunizieren, d.h. Sprachdaten aufzunehmen und zu elektronischen Daten zu konvertieren (speech-to-text conversion) und elektronische Daten zur Übermittlung an das erste Endgerät, beispielsweise zu einer Menuführung, in Sprachdaten zu konvertieren (text-to-speech conversion). Diensterelevante Daten (Kommunikationsforum, Ortsbereich und weitere Information) werden dann an den Diensterechner CS übermittelt. Der Diensterechner CS ermittelt aufgrund der empfangenen Information relevante Endgeräte T2 mit Hilfe weiterer Einrichtungen, beispielsweise unter Zuhilfenahme einer Teilnehmerdatenbank und des Ortungsrechners LS. Er übermittelt die ermittelte Information oder veranlasst die Übermittlung dieser Information an den Kommunikationsserver und weist diesen Server an diese Information an das erste Endgerät zu übermitteln. Diese Alternative hat den Vorteil, dass sie ohne Änderungen an der bestehenden Infrastruktur und mit herkömmlichen Endgeräten (Mobilfunk oder Festnetz) durchgeführt werden kann, da die Kommunikation zwischen den Teilnehmern und den Dienste-Einrichtungen mittels Sprachkommunikation erfolgt. Allerdings sollte die Menüführung möglichst einfach gestaltet werden. Weitere sollte die mit einem Mal übermittelte Information an den anrufenden Teilnehmer T1 nicht zu umfangreich sein (indem die Information in mehrere Informationsteile zerlegt wird diese Informationsteil hintereinander, jeweils auf Anfrage des Anrufenden Teilnehmers, übermittelt werden.

Der Diensterechner CS kann aus einem zentralen Rechner mit Hard- und Software oder einem Rechnerverbund oder aus mehreren dezentralen miteinander kommunizierenden Rechnern bestehen. Insbesondere können verschiedene Aufgaben, beispielsweise die Datenverwaltung, die Teilnehmerkommunikation, die Rufsteuerung und die Authentifizierung jeweils physikalisch verschiedenen Rechnern zugewiesen werden.

Das erfindungsgemäße Verfahren ist unabhängig von der physikalischen Ausprägung oder von den Kommunikationsprotokollen des Kommunikationsnetzes CN. Vorteilhaft kann das erfindungsgemäße Verfahren vor allem auch in zukünftigen Mobilfunknetzen nach dem sogenannten UMTS-Standard (UMTS = Universal Mobile Telecommunications System) angewandt werden.

## Patentansprüche

1. Verfahren zur Vermittlung von Kommunikationsangeboten zwischen (Teilnehmer-) Endgeräten (T1, T2, T3, T4) eines Kommunikationsnetzes (CN), **dadurch gekennzeichnet, dass** es folgende Schritte aufweist:
• ein Diensterechner (CS) empfängt eine Kommunikationsanforderung eines ersten Endgeräts (T1) mit mindestens einem Kommunikationskriterium,
• der Diensterechner (CS) ordnet diese Kommunikationsanforderung aufgrund der empfangenen Kommunikationskriterien einem Kommunikationsforum zu und ermittelt gespeicherte Kommunikationsanforderungen weiterer Endgeräte (T2, T4), welche dem selben Kommunikationsforum zugeordnet sind,
• der Diensterechner (CS) übermittelt die Netzadressen ermittelter Endgeräte (T2, T4) an das erste Endgerät (T1) und
• der Diensterechner (CS) nimmt die Kommunikationsanforderung des ersten Endgeräts (T1) als Kommunikationsangebot durch Speichern mindestens der Netzadresse dieses Endgeräts (T1) und Zuordnen zum entsprechenden Kommunikationsforum auf.

2. Verfahren nach Anspruch 1, **dadurch gekennzeichnet, dass** der Diensterechner (CS) Information jeweils über den aktuellen Ort von Endgeräten (T1, T2, T3, T4) empfängt und aus den Endgeräten (T2, T4), die dem selben Kommunikationsforum zugeordnet sind, die Netzadressen derjenigen Endgeräte (T2) ermittelt, welche bezüglich des ersten Endgeräts (T1) ein bestimmtes Ortskriterium erfüllen.

3. Verfahren nach Anspruch 1, **dadurch gekennzeichnet, dass** die Information über den aktuellen Ort von Endgeräten (T1, T2, T3, T4) mittels einer netzseitigen Ortungseinrichtung automatisch ermittelt und dem Diensterechner (CS) übermittelt werden.

4. Verfahren nach Anspruch 1, **dadurch gekennzeichnet, dass** der Diensterechner (CS) weitere Information von den Endgeräten (T1, T2, T3, T4) empfängt und speichert und bei einer Kommunikationsanforderung eines anfragenden Teilnehmers (T1) zusätzlich jeweils zur Netzadresse der ermittelten Teilnehmer (T2, T4) die entsprechende Information an das anfragende Endgerät (T1) übermittelt.

5. Verfahren nach Anspruch 1, **dadurch gekennzeichnet, dass** ein im Diensterechner (CS) gespeichertes Kommunikationsangebot durch Übermittlung einer Löschungsaufforderung gelöscht wird.

6. Verfahren nach Anspruch 1, **dadurch gekennzeichnet, dass** ein im Diensterechner (CS) gespeicherte Kommunikationsangebot automatisch gelöscht wird, wenn bestimmte Kriterien erfüllt sind.

7. Kommunikationsnetz (CN) zur Durchführung eines Dienstes zur Vermittlung von Kommunikationsangeboten zwischen (Teilnehmer-) Endgeräten (T1, T2, T3, T4), mit folgenden Mitteln:
• Empfangsmittel zum Empfang von Kommunikationsanforderungen mit jeweils mindestens einer Netzadresse und einem Kommunikationskriterium,
• Zuordnungsmittel zum Zuordnen von Endgeräten (T1, T2, T3, T4) zu Kommunikationsforen,
• Speichermittel zum Speichern von Netzadressen von Endgeräten (T1, T2, T3, T4) unter einem jeweils zugeordneten Kommunikationsforum und
• Sendemittel zum Senden der Netzadressen derjenigen Endgeräte (T2, T4) an ein anfragendes Endgerät (T1) welche demselben Kommunikationsforum zugeordnet sind.

8. Diensterechner (CS) eines Kommunikationsnetzes (CN) zur Durchführung eines Dienstes zur Vermittlung von Kommunikationsangeboten zwischen (Teilnehmer-) Endgeräten (T1, T2, T3, T4), mit folgenden Mitteln:
• Empfangsmittel zum Empfang von Kommunikationsanforderungen mit jeweils mindestens einer Netzadresse und einem Kommunikationskriterium,
• Zuordnungsmittel zum Zuordnen von Endgeräten (T1, T2, T3, T4) zu Kommunikationsforen,
• Speichermittel zum Speichern von Netzadressen von Endgeräten (T1, T2, T3, T4) unter einem jeweils zugeordneten Kommunikationsforum und
• Sendemittel zum Senden der Netzadressen derjenigen Endgeräte (T2, T4) an ein anfragendes Endgerät (T1) welche demselben Kommunikationsforum zugeordnet sind.

9. Programmmodul zum Ablauf in einem Diensterechner (CS) , zur Steuerung der folgenden Schritte:
• empfangen einer Kommunikationsanforderung eines ersten Endgeräts (T1) und mindestens eines Kommunikationskriteriums,
• zuordnen dieser Kommunikationsanforderung zu einem Kommunikationsforum und ermitteln von Kommunikationsangeboten von Endgeräten (T2, T4), welche dem selben Kommunikationsforum zugeordnet sind und
• übermitteln der Netzadressen der ermittelten Endgeräte (T2, T4) an das erste Endgerät (T1) und
• aufnehmen der Kommunikationsanforderung des ersten Endgeräts (T1) als Kommunikationsangebot für weitere Teilnehmer durch speichern der Netzadresse des ersten Endgeräts (T1) unter dem zugeordneten Kommunikationsforum.
